Europäisches Patentamt

European Patent Office

Office européen des brevets

(19)

(11) Numéro de publication : **0 115 239**
**B1**

(12) **FASCICULE DE BREVET EUROPÉEN**

(45) Date de publication du fascicule du brevet :
07.05.86

(51) Int. Cl.⁴ : **H 02 B   1/04**

(21) Numéro de dépôt : **83402548.8**

(22) Date de dépôt : **28.12.83**

(54) **Profilé et écrou pour fixer des appareillages.**

(30) Priorité : **05.01.83 FR 8300090**

(43) Date de publication de la demande :
**08.08.84 Bulletin 84/32**

(45) Mention de la délivrance du brevet :
**07.05.86 Bulletin 86/19**

(84) Etats contractants désignés :
**BE DE GB IT LU NL**

(56) Documents cités :
**DE-A- 2 503 534**
**FR-A- 2 101 984**

(73) Titulaire : **LA TELEMECANIQUE ELECTRIQUE**
**33 bis, avenue du Maréchal Joffre**
**F-92000 Nanterre (FR)**

(72) Inventeur : **Verdenne, Serge**
**7 rue du Potet**
**21120 Marcilly Sur Tille (FR)**
Inventeur : **Lucas, Gérard**
**5 chemin de Ronde**
**78290 Croissy Sur Seine (FR)**
Inventeur : **Brocard, Didier**
**12 rue du Maréchal Delattre de Tassigny**
**Le Clos du roi 78780 Maurecourt (FR)**

(74) Mandataire : **Bouju, André**
**Cabinet Bouju 38 avenue de la Grande Armée**
**F-75017 Paris (FR)**

EP 0 115 239 B1

Jouve, 18, rue St-Denis, 75001 Paris, France

## Description

La présente invention concerne un profilé du genre utilisé pour fixer des appareillages, notamment dans les armoires ou installations électriques.

La présente invention concerne également un écrou destiné à être monté de façon coulissante entre les ailes du profilé précité pour y fixer des appareillages en position réglable.

Les profilés précités sont soumis à des normes fixant à deux millimètres et demi l'épaisseur maximale de la tôle qui les constitue, cette épaisseur devant être ramenée à 1 millimètre aux bords longitudinaux du profilé. Si l'épaisseur générale dépasse 1 mm, il faut donc chanfreiner le bord et l'angle du chanfrein est fixé à 15°.

En outre, il existe deux types d'appareils se différenciant par leur mode de fixation au profilé. Le premier type d'appareils doit être vissé et on utilise alors très généralement un profilé en C capable de retenir sous ses ailes terminales un écrou coulissable mais rendu immobile en rotation (voir DE-A-2 503 534).

Le second type d'appareils est encliquetable et comporte, à cet effet, une semelle ayant un évidement en queue d'aronde dont l'un des côtés est écartable à l'encontre d'un moyen de rappel élastique. Pour ces appareils, on sait utiliser un profil se distinguant du précédent en ce que ses deux ailes terminales sont repliées l'une à l'opposé de l'autre et non plus l'une vers l'autre.

Le fabricant actuel est ainsi tenu de produire deux types de profilés, et chacun d'eux est coûteux à produire en respectant les normes exposées plus haut.

Le but de l'invention est ainsi de proposer un profilé plus économique à fabriquer que les profilés connus et qui réponde aux normes en cours.

L'invention vise ainsi un profilé pour la fixation d'appareillages, notamment dans les armoires électriques. Le profilé comprend une paroi de fond et deux parois latérales auxquelles sont raccordées, à l'opposé du fond, deux parois d'épaulement sensiblement dirigées l'une vers l'autre.

Suivant l'invention, le profilé est caractérisé en ce qu'à l'opposé des parois latérales, les parois d'épaulement sont raccordées à deux parois de col dirigées à l'opposé du fond, auxquelles font suite deux ailes dirigées sensiblement à l'opposé l'une de l'autre, une fente étant réservée entre les parois de col.

Les appareils peuvent être fixés à un tel profilé au moyen d'un système vis-écrou prenant appui contre la face interne des parois d'épaulement. Mais les appareils peuvent aussi, s'ils sont prévus pour cela, être encliquetés sous les ailes opposées du profilé.

Un seul type de profilé est donc seulement nécessaire pour permettre la fixation d'appareils vissables ou encliquetables. La fabrication et la tenue des stocks sont ainsi simplifiées. En outre, on peut désormais fixer sur un même profilé des appareils vissables et des appareils encliquetables, ce qui était impossible jusqu'à présent.

Il est, de plus, apparu de façon très surprenante que le profilé conforme à l'invention a, de par son profil, une excellente rigidité, notamment à la flexion et à la torsion, de telle sorte qu'il peut être entièrement réalisé avec une épaisseur de métal de 1 mm. Il n'est donc plus nécessaire de prendre des précautions de fabrication pour réaliser les chanfreins à 15° sur les bords, ni pour donner aux bords l'épaisseur normalisée, celle-ci étant directement obtenue par l'épaisseur de métal utilisée pour tout le profilé.

Plutôt que de ramener le profilé à une épaisseur uniforme de 1 mm ou moins, on peut préférer maintenir une épaisseur plus importante avec des bords chanfreinés, auquel cas on obtiendra une rigidité plus importante que par le passé, ou alors on aura la possibilité d'utiliser des matières moins chères que par le passé.

Selon un autre aspect de l'invention, l'écrou destiné à être monté dans un profilé du genre précité est caractérisé en ce qu'il comporte un corps traversé par au moins un alésage taraudé, et deux pattes attachées au corps, susceptibles d'un débattement angulaire élastique, dirigées du même côté du corps, ayant des directions sensiblement transversales au corps, et séparées l'une de l'autre par une distance voisine de la distance entre les parois de col du profilé, chacune des pattes portant, du côté opposé à l'autre patte, une saillie appropriée pour être en prise contre la face interne des parois d'épaulement du profilé.

D'autres particularités et avantages de l'invention ressortiront encore de la description ci-après.

Aux dessins annexés, donnés à titre d'exemples non limitatifs :

La Figure 1 est une vue en perspective avec arrachement d'un morceau de profilé conforme à l'invention ;

Les Figures 2 et 3 sont des vues de face du profilé de la Figure 1, sur lequel sont respectivement montés un appareil encliquetable et un appareil vissable ;

Les Figures 4 et 5 sont des vues en perspective, sous deux angles opposés, de l'écrou conforme à l'invention ;

La Figure 6 est une vue de face de l'écrou des Figures 4 et 5 ;

La Figure 7 est une vue de dessus de l'écrou des Figures 4 et 5 ;

La Figure 8 est une vue en plan de la découpe servant à la fabrication de l'écrou préalablement au pliage, et

la Figure 9 est une vue de face du profilé et de l'écrou au cours de l'encliquetage de ce dernier.

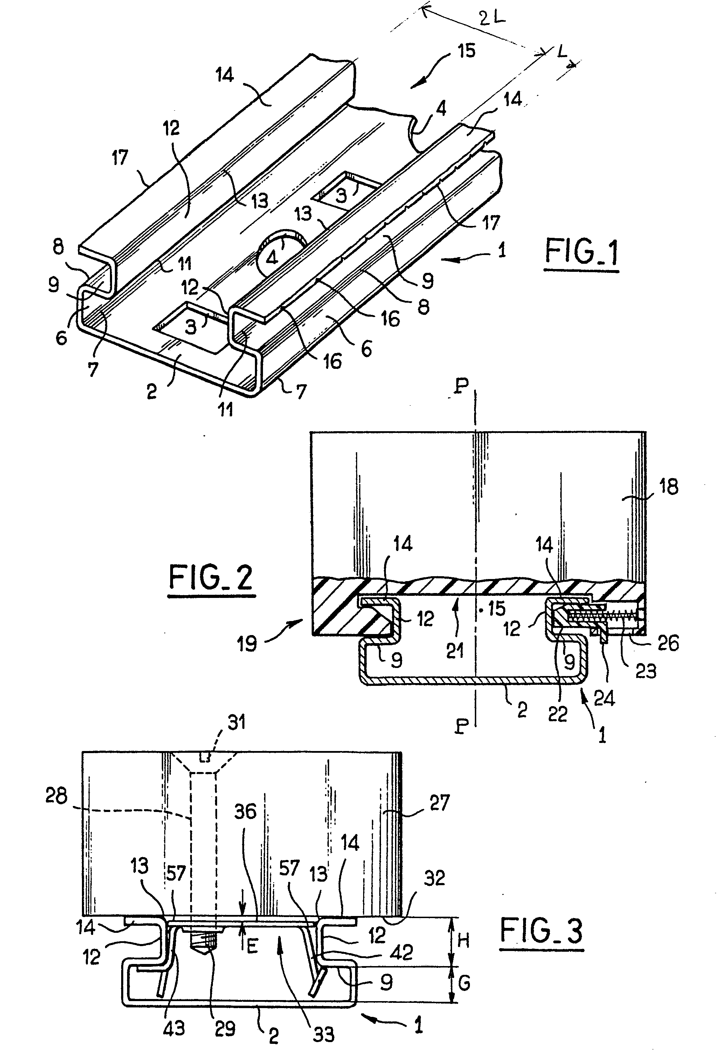

Comme le montrent les Figures 1 à 3, le profilé 1, réalisé en tôle métallique pliée, comporte une paroi de fond 2 traversée par deux types de perçages 3, 4, qui alternent mutuellement et permettent ainsi la fixation du fond 2 à des montants métalliques ayant des configurations et des écartements divers. Chacun des bords latéraux du fond 2 est raccordé à une paroi latérale 6 par un pliage 7 à 90°. Les parois latérales 6, qui se font face, sont chacune raccordées, par un pliage 8 à 90°, à une paroi d'épaulement 9. Les parois 9 sont sensiblement dans un même plan, et dirigées l'une vers l'autre depuis les parois latérales 6.

Conformément à l'invention, sur leurs bords latéraux opposés aux parois 6, les parois 9 sont raccordées par des pliages 11 formant un angle de 90° en direction opposée aux pliages 7 et 8, à deux parois de col 12 parallèles et dirigées à l'opposé du fond 2. Enfin, à leur bord longitudinal opposé au fond 2, chaque paroi 12 est raccordée par un pliage 13 effectué à 90° et dans le même sens que le pliage 11, à une aile 14 dirigée à l'opposé d'un plan de symétrie longitudinal PP (Figure 2) que présente le profilé 1 perpendiculairement au fond 2.

Le bord latéral libre de chaque aile 14, qui est sensiblement dans le prolongement de la paroi latérale 6 correspondante, présente des encoches régulièrement disposées 16, pratiquées dans l'arête 17 de ce bord qui est la plus proche du plan du fond 2.

Les parois 6, 9, 12 et 14 ont toutes sensiblement la même largeur L. Entre les parois de col 12 est réservée une fente 15 de largeur 2L environ dans l'exemple représenté.

La tôle utilisée pour réaliser le profilé 1 a 1 mm d'épaisseur en tout point de la section du profilé 1.

Comme le montre la Figure 2, le profilé peut recevoir des appareils encliquetables 18 dont la semelle 19 présente un évidement en queue d'aronde 21 dont le fond a une largeur (mesurée transversalement au profilé 1) correspondant à la distance entre les bords libres des ailes 14. D'un côté, l'évidement 21 est délimité par un organe de verrouillage 22, monté à coulisse en direction transversale du profilé relativement à la semelle 19. L'organe de verrouillage 22 est sollicité par un ressort 23 vers une première position limite dans laquelle l'évidement 21 est le plus étroit. L'organe 22 est solidaire d'un ergot 24 faisant saillie sous la semelle 19 par une lumière 26. En manœuvrant l'ergot 24, l'utilisateur peut, moyennant contraction du ressort 23, faire coulisser l'organe 22 vers une seconde position limite dans laquelle l'entrée de l'évidement 21 est suffisamment élargie pour pouvoir engager l'appareil 18 sur le profilé 1 ou l'en dégager.

Lorsque l'appareil 18 est en place sur le profilé 1, les encoches 16 se trouvant du côté fixe de l'évidement 21 sont poussées par le ressort 23 dans l'angle aigu concave de l'évidement 21 et elles coopèrent avec les parois de cet angle pour combattre toute tendance de l'appareil 18 à glisser le long du profilé 1 après sa mise en place.

Mais comme le montre la Figure 3, un appareil vissable peut également être monté sur le profilé 1 au moyen d'une vis 28 dont l'extrémité 29 opposée à la tête 31 est engagée entre les parois de col 12 du profilé 1, tandis que l'appareil 27 est appliqué par sa semelle 32 contre la face des ailes 14 opposée au fond 2 du profilé.

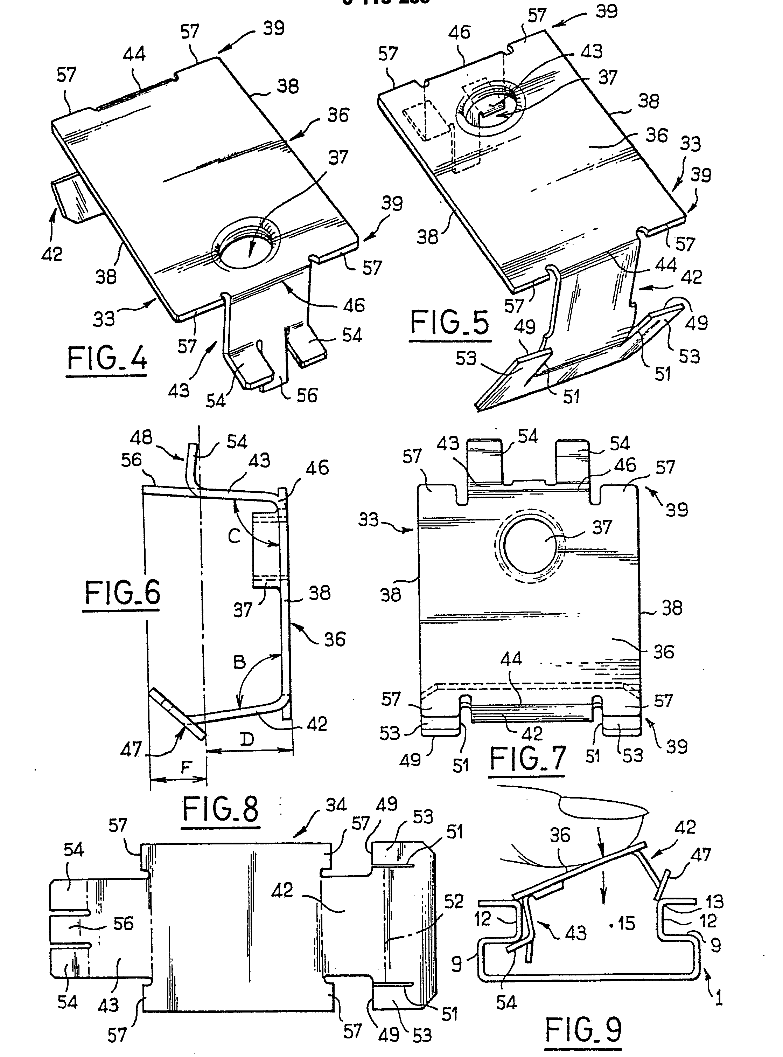

La partie filetée de la vis 28 coopère avec un écrou 33 monté à coulisse dans le profilé 1 et dont les Figures 4 à 7 donnent des représentations à plus grande échelle.

L'écrou 33 est réalisé à partir d'une découpe 34 (Figure 8) en tôle d'acier douée d'élasticité, dont l'épaisseur est uniforme et comprise entre 5/10 mm et 1 mm par exemple. Il comprend un corps 36 de forme générale plane et rectangulaire traversé par au moins un perçage 37 déformé cylindriquement, puis taraudé dans la partie cylindrique de façon à constituer l'alésage taraudé de l'écrou.

Les deux côtés 38 du corps 36 qui s'étendent suivant la longueur du rectangle sont rectilignes et sont en service disposés transversalement au profilé 1.

A chacun des côtés 39 du corps 36 qui s'étendent suivant la largeur du rectangle sont raccordées des pattes 42, 43 par des pliages 44, 46 respectivement.

Les pattes 42, 43 s'étendent toutes les deux transversalement au corps 36, et du même côté de ce dernier, c'est-à-dire vers le fond 2 lorsque l'écrou est en place dans le profilé 1 (Figure 3).

Les pattes 42, 43, qui sont séparées l'une de l'autre par une distance approximativement égale à la largeur 2L de la fente 15, sont assez larges pour immobiliser l'écrou en rotation dans le profilé 1.

En outre, chaque patte 42, 43 porte du côté opposé à l'autre patte une saillie 47, 48 destinée à prendre appui contre la face interne des parois d'épaulement 9.

En ce qui concerne la patte 42, la saillie 47 constitue un bec — ou harpon — formant un angle aigu (Figure 6) avec la partie de la patte qui s'étend entre ce harpon et le corps 36. Pour réaliser ce bec, la découpe de la patte 42 a la forme d'un marteau (Figure 8) dont le manche serait rattaché au corps 36. Dans chacun des épaulements 49 donnant la forme en marteau est pratiquée une entaille 51 s'étendant vers l'extrémité libre de la patte 42, sans l'atteindre. En outre, la patte 42 est repliée selon une ligne 52 parallèle au corps 38 et s'étendant entre les deux entailles 51. Ce pliage donne à la patte 42 un profil à angle obtus dont la concavité est du côté de la patte 43, tandis que les languettes 53, formées entre chaque découpe 51 et le bord latéral adjacent de la patte 42, gardent leur profil rectiligne et constituent ensemble le harpon 47.

Sur environ la moitié de sa longueur depuis son extrémité, la patte 43 est découpée en trois branches longitudinales. Les deux branches extrêmes 54 sont, à leur racine, repliées à 90° en direction opposée à l'autre branche 42. La branche centrale 56 demeure dans le prolongement du reste de la patte 43.

La distance D entre le plan de la surface externe du corps 38 et les points de contact prévus entre chaque butée 47 ou 48 et la paroi d'épaulement 9 correspondante du profilé avoisine la distance H (Figure 3) entre les faces opposées des parois 9 et des ailes 14, mais est toutefois légèrement inférieure à celle-ci, même après mise en tension par serrage de la vis. Ainsi, comme le montre la Figure 3, il demeure un espace E entre le corps 36 et la semelle 32 de l'appareil 27, supposée plane.

En outre, la distance F (Figure 6), mesurée perpendiculairement au corps 38, entre les points précités des saillies 47, 48 et l'extrémité libre des pattes 42, 43, est voisine, mais légèrement inférieure à la distance libre G (Figure 3), séparant la face interne des parois d'épaulement 9 et la face interne du fond 2.

Les pattes 42 et 43 forment, du moins à leur racine, des angles obtus B et C respectivement avec le corps 36 de l'écrou. En outre, cet angle est susceptible de varier légèrement par débattement angulaire élastique des pattes 42, 43. On obtient ainsi de façon très simple deux résultats. D'une part, un serrage de l'écrou entre les parois de col 12 sans avoir à dimensionner avec précision ni l'écrou, ni le profilé. D'autre part, un appui en bout des languettes 54 contre la paroi d'épaulement 9 correspondante du profilé, ce qui confère au serrage vis 28 — écrou 33 un caractère élastique tant que les languettes 54 ne sont pas plaquées contre la paroi 9.

Les pattes 42, 43 sont moins larges que le corps 36 de l'écrou 33 et sont raccordées centralement aux côtés 39 du corps 36.

De part et d'autre de la patte 42 ou 43 qui lui est raccordée, chaque côté 39 est découpé de façon à former une saillie plane 57. Par ailleurs, comme cela apparaît bien sur la Figure 3, chaque pliage, et notamment chaque pliage 13 du profilé 1 est effectué selon un rayon appréciable, de sorte que la fente 15 est évasée du côté des ailes 14. La longueur hors tout, c'est-à-dire la distance entre l'extrémité d'une saillie 57 et l'extrémité de la saillie 57 opposée est telle que le corps 36 de l'écrou 33 peut librement s'engager suffisamment dans la partie évasée entre les parois 12 pour présenter le retrait E relativement à la face externe des ailes 14 mais ne peut que très difficilement ou pas du tout s'engager complètement dans la partie la plus étroite de la fente 15 s'il est perpendiculaire aux ailes 12.

Comme le montre la Figure 9, l'angle obtus de pliage de la patte 42 est choisi de façon que la distance hors tout s'étendant entre la racine de la patte 43 et l'extrémité libre de la patte 42 est à peu près égale à la distance libre entre les parois 12.

L'écrou qui vient d'être décrit s'utilise de la façon suivante :

On peut le mettre en place en l'introduisant par l'extrémité du profilé 1, mais ceci étant généralement malcommode, voire impossible, on préfère la méthode représentée à la Figure 9, consistant à engager les languettes 54 sous l'une des parois 9 en laissant, pour le moment, la patte 42 en dehors du profilé 1. En raison de la relation dimensionnelle relative à la distance entre la racine de la patte 43 et l'extrémité de la patte 42, cette extrémité libre se trouve alors en appui contre le pliage 13 opposé à la patte 43. Il suffit ensuite d'appuyer avec le doigt sur le corps 36 pour forcer la patte 42 à s'engager entre les parois 12 jusqu'à mise en place correcte de l'écrou 33, c'est-à-dire jusqu'à ce que le harpon 47 s'engage sous la paroi 9. On peut ensuite faire coulisser l'écrou 33 dans le profilé 1. Grâce aux languettes 57 et surtout aux pattes 42 et 43 prolongées jusqu'au fond 2 du profilé, l'écrou ne peut s'échapper vers le fond 2.

On met ensuite en place l'appareil 27 sur le profilé 1 et grâce au retrait E prévu entre le corps 36 et la semelle 32, le serrage de la vis 28 provoque effectivement un appui de plus en plus prononcé de la semelle 32 sur les ailes 14. L'écrou ne peut tourner au cours du vissage car les pattes 42, 43 et les saillies 57 appuyées contre les parois 12 s'y opposent. Du fait du harpon 47, l'écrou 33 ne peut se dégager du profilé 1 sous l'effet du serrage.

On a pu ainsi vérifier tout au long de la description que l'invention, qui procure un profilé plus simple à fabriquer et plus commode à employer que chacun des deux profilés connus qu'il remplace à lui seul, ainsi qu'un écrou facile à mettre en place dans le profilé, et ensuite guidé sans anicroche possible dans celui-ci, assure un progrès considérable dans le domaine de la fixation d'appareillage sur profilés.

**Revendications**

1. Profilé pour la fixation d'appareillages, notamment dans les armoires électriques, ce profilé (1) comprenant une paroi de fond (2) et deux parois latérales (6) auxquelles sont raccordées, à l'opposé du fond (2), deux parois d'épaulement (9) sensiblement dirigées l'une vers l'autre, caractérisé en ce qu'à l'opposé des parois latérales (6), les parois d'épaulement (9) sont raccordées à deux parois de col (12) dirigées à l'opposé du fond (2), auxquelles font suite deux ailes (14) dirigées sensiblement à l'opposé l'une de l'autre, une fente (15) étant réservée entre les parois de col (12).

2. Profilé pour la fixation d'appareillages conforme à la revendication 1, caractérisé en ce que la paroi de fond (2), les parois d'épaulement (9) et les ailes (14) sont parallèles.

3. Profilé pour la fixation d'appareillages conforme à la revendication 1 ou 2, caractérisé en ce que les parois d'épaulement (9) ont la même largeur (L) que les ailes (14).

4. Profilé pour la fixation d'appareillages conforme à l'une des revendications 1 à 3, caractérisé en ce que les parois latérales (6) sont parallèles aux parois de col (12).

5. Profilé pour la fixation d'appareillages conforme à l'une des revendications 1 à 4, caractérisé en ce que les parois (2, 6, 9, 12) et les ailes (14) sont planes et mutuellement délimitées par des plis à 90° (7, 8, 11, 13).

6. Ecrou destiné à être monté dans un profilé conforme à l'une des revendications 1 à 5, caractérisé en ce qu'il comporte un corps (36) traversé par au moins un alésage taraudé (37), et deux pattes (42, 43) attachées au corps (36) susceptibles d'un débattement angulaire élastique, dirigées du même côté du corps et ayant des directions sensiblement transversales au corps (36), et séparées l'une de l'autre par une distance voisine de la distance (2L) entre les parois de col (12) du profilé (1), chacune des pattes (42, 43) portant, de son côté opposé à l'autre patte, une saillie (47, 48) appropriée pour être en prise contre la face interne des parois d'épaulement du profilé (1).

7. Ecrou destiné à être monté dans un profilé et conforme à la revendication 6, caractérisé en ce que la distance (D) entre les saillies (47, 48) et la face externe du corps d'écrou (36) est avoisinante, mais légèrement inférieure à la distance (H) entre les faces opposées des parois d'épaulement (9) et des ailes (14).

8. Ecrou destiné à être monté dans un profilé et conforme à la revendication 7, caractérisé en ce que le corps (36) présente à la racine de l'une au moins des pattes (42, 43), une saillie (57) dont la dimension est appropriée pour permettre l'engagement du corps (36) dans une zone évasée à la jonction entre les parois de col (12) et les ailes (14), et pour freiner l'engagement du corps (36) entre les parois de col (12).

9. Ecrou destiné à être monté dans un profilé et conforme à l'une des revendications 6 à 8, caractérisé en ce que l'une au moins des saillies (48) est constituée par au moins une languette (54) sensiblement parallèle au corps (36).

10. Ecrou destiné à être monté dans un profilé et conforme à l'une des revendications 6 à 9, caractérisé en ce que l'une au moins des saillies (47) est conformée en harpon (53).

11. Ecrou destiné à être monté dans un profilé et conforme à la revendication 10, caractérisé en ce que la patte (42) portant le harpon (53) est pliée selon un angle obtus (52) dont la concavité est du côté de l'autre patte (43), et en ce que le harpon (53) est constitué par au moins une languette (53) portée par la patte (42) au delà du pliage obtus (52) relativement au corps (36).

12. Ecrou destiné à être monté dans un profilé et conforme à la revendication 10 ou 11, caractérisé en ce que l'une des pattes (42) est pliée à distance du corps (36) selon un angle obtus (52) dont la concavité est dirigée vers l'autre patte (43), et en ce que la distance entre l'extrémité libre de la patte pliée à angle obtus (42) et la racine de l'autre patte (43) est sensiblement égale à la distance entre les deux parois de col (12).

13. Ecrou destiné à être monté dans un profilé et conforme à l'une des revendications 6 à 12, caractérisé en ce que la distance (F), mesurée perpendiculairement au plan du corps, entre la zone où l'une au moins des saillies (47, 48) est en contact avec la paroi d'épaulement correspondante (9) et l'extrémité de cette patte, est voisine de la distance libre (G) entre les parois d'épaulement (9) et la paroi de fond (2) du profilé (1), mais légèrement inférieure à cette distance (G).

14. Ecrou destiné à être monté dans un profilé et conforme à l'une des revendications 6 à 13, caractérisé en ce qu'il est réalisé dans une feuille d'acier découpée et pliée.

**Claims**

1. A section member for the mounting of appliances *inter alia* in electrical cubicles, the section member (1) comprising a base wall (2) and two side walls (6) which are connected, remote from the base (2), to two shoulder walls (9) extending substantially towards one another, characterised in that, remote from the side walls (6), the shoulder walls (9) are connected to two neck walls (12) which extend away from the base (2) and which merge into two arms (14) extending substantially away from each other, a space (15) being left between the neck walls (12).

2. A section member according to claim 1, characterised in that the base wall (2), the shoulder walls (9) and the arms (14) are parallel.

3. A section member according to any of claims 1 or 2, characterised in that the shoulder walls (9) are of the same width (L) as the arms (14).

4. A section member according to claims 1-3, characterised in that the side walls (6) are parallel to the neck walls (12).

5. A section member according to any of claims 1-4, characterised in that the walls (2, 6, 9, 12) and the arms (14) are plane and delimited from one another by 90° bends (7, 8, 11, 13).

6. A nut introducible into a section member according to any of claims 1-5, characterized in that it comprises a body (36) formed with at least one tapped bore (37), two legs (42, 43) being secured to the body (36) and being adapted for resilient angular movement and extending on the same side of the body and having directions substantially transverse to the body, said legs being separated from one another by a distance close to the distance (2L) between the neck walls (12), each said leg (42, 43) having, on its side remote from the other leg, an appropriate projection (47, 48) for engagement with the inside surface of the shoulder walls (9).

7. A nut according to claim 6, characterised in that the distance (D) between the projections (47, 48) and the outside surface of the nut body (36) is close to but slightly less than the distance (H) between the surfaces, facing away from each other, of the shoulder walls (9) and the arms (14).

8. A nut according to claim 7, characterised in that the body (36) has at the root of at least one of the legs (42, 43) a projection (57) dimensioned to allow insertion of the body (36) in a flared zone at the junction between the neck walls (12) and the arms (14) and to retard insertion of the body (36) between the neck walls (12).

9. A nut according to any one of claims 6-8, characterised in that at least one of the projections (48) consists of at least one tongue (54) disposed substantially parallel to the body (36).

10. A nut according to any of claims 6-9, characterised in that at least one of the projections (47) is harpoon-shaped (53).

11. A nut according to claim 10, characterised in that the leg (42) having the harpoon (53) is bent at an obtuse angle (52) with its concavity facing towards the other leg (43), and the harpoon (53) consists of at least one tongue (53) carried by the leg (42) beyond the obtuse-angled bend (52) relatively to the body (36).

12. A nut according to claim 10 or 11, characterised in that one of the legs (42) is bent at an obtuse angle (52) at a distance from the body (36), the concavity of the latter angle being directed towards the other leg (43), and the distance between the free end of the obtuse-angled leg (42) and the root of the other leg (43) is substantially equal to the distance between the two neck walls (12).

13. A nut according to any of claims 6-12, characterised in that the distance (F) measured perpendicularly to the plane of the body between the zone where at least one of the projections (47, 48) is in contact with the corresponding shoulder wall (9) and the end of this leg is close to the free distance (G) between the shoulder walls (9) and the base (2) of the section member (1) but slightly less than the latter distance.

14. A nut according to any of claims 6-13, characterised in that it is made of cut and bent steel sheet.

**Patentansprüche**

1. Gerätebefestigungsprofil, insbesondere für Elektroschränke, wobei dieses Profil (1) eine Bodenwand (2) und zwei Seitenwände (6) aufweist, an welche gegenüber dem Boden (2) zwei Schulterwände (9) angeschlossen sind, die im wesentlichen gegeneinander gerichtet sind, dadurch gekennzeichnet, daß gegenüber den Seitenwänden (6) die Schulterwände (9) an zwei Halswände (12) angeschlossen sind, welche vom Boden (2) fort gerichtet sind, woran zwei Flügel (14) anschließen, die im wesentlichen voneinander fort gerichtet sind, wobei ein Schlitz (15) zwischen den Halswänden (12) verbleibt.

2. Gerätebefestigungsprofil nach Anspruch 1, dadurch gekennzeichnet, daß die Bodenwand (2), die Schulterwände (9) und die Flügel (14) parallel sind.

3. Gerätebefestigungsprofil nach Anspruch 1 oder 2, dadurch gekennzeichnet, daß die Schulterwände (9) dieselbe Breite (L) wie die Flügel (14) aufweisen.

4. Gerätebefestigungsprofil nach einem der Ansprüche 1 bis 3, dadurch gekennzeichnet, daß die Seitenwände (6) parallel zu den Halswänden (12) sind.

5. Gerätebefestigungsprofil nach einem der Ansprüche 1 bis 4, dadurch gekennzeichnet, daß die Wände (2, 6, 9, 12) und die Flügel (14) eben sind und jeweils durch 90°-Biegungen (7, 8, 11, 13) voneinander abgegrenzt sind.

6. Mutter zum Einbau in ein Profil nach einem der Ansprüche 1 bis 5, dadurch gekennzeichnet, daß sie einen Körper (36) umfaßt, der von wenigstens einer Gewindebohrung (37) durchquert wird, und zwei an dem Körper (36) befestigte Laschen (42, 43) aufweist, die eine elastische Winkelauslenkung ausführen können sowie zur selben Seite des Körpers gerichtet sind und zum Körper (36) im wesentlichen quer verlaufende Richtungen aufweisen sowie voneinander durch einen Abstand getrennt sind, der etwa gleich dem Abstand (2L) zwischen den Halswänden (12) des Profils (1) ist, wobei jede der Laschen (42, 43) auf ihrer von der anderen Lasche abgewandten Seite einen geeigneten Vorsprung (47, 48) zum Eingreifen an der Innenfläche der Schulterwände des Profils (1) trägt.

7. Zum Einbau in ein Profil bestimmte Mutter nach Anspruch 6, dadurch gekennzeichnet, daß der Abstand (D) zwischen den Vorsprüngen (47, 48) und der Außenfläche des Mutternkörpers (36) etwa gleich dem Abstand (H) zwischen den von einander abgewandten Flächen der Schulterwände (9) und der Flügel (14), jedoch etwas kleiner als dieser Abstand ist.

8. Zum Einbau in ein Profil bestimmte Mutter nach Anspruch 7, dadurch gekennzeichnet, daß der Körper (36) am Ansatz wenigstens einer der Laschen (42, 43) einen Vorsprung (57) aufweist, dessen Abmessung geeignet ist, um das Einsetzen des Körpers (36) in eine sich erweiternde Zone am Übergang zwischen den Halswänden (12) und den Flügeln (14) zu gestatten und um ein Hemmnis für eine Einsetzung des Körpers (36) zwischen die Halswände (12) zu bilden.

9. Zum Einbau in ein Profil bestimmte Mutter nach einem der Ansprüche 6 bis 8, dadurch gekennzeichnet, daß wenigstens einer der Vorsprünge (48) durch wenigstens eine Zunge (54) gebildet ist, welche im wesentlichen parallel zu dem Körper (36) ist.

10. Zum Einbau in ein Profil bestimmte Mutter nach einem der Ansprüche 6 bis 9, dadurch gekennzeichnet, daß wenigstens einer der Vorsprünge (47) harpunenförmig ausgebildet ist (53).

11. Zum Einbau in ein Profil bestimmte Mutter nach Anspruch 10, dadurch gekennzeichnet, daß die das harpunenförmige Teil (53) tragende Lasche (42) in stumpfem Winkel (52) gebogen ist, dessen konkave Seite auf seiner der anderen Lasche (43) zugewandten Seite liegt, und daß das harpunenförmige Teil (53) durch wenigstens eine Zunge (53) gebildet ist, die von der Lasche (42) jenseits der stumpfen Abbiegung (52) bezüglich des Körpers (36) getragen ist.

12. Zum Einbau in ein Profil bestimmte Mutter nach Anspruch 10 oder 11, dadurch gekennzeichnet, daß eine der Laschen (42) im Abstand vom Körper (36) mit einem stumpfen Winkel (52) abgebogen ist, dessen konkave Seite zur anderen Lasche (43) gerichtet ist, und daß der Abstand zwischen dem freien Ende der in stumpfem Winkel (42) gebogenen Lasche und dem Ansatz der anderen Lasche (43) im wesentlichen gleich dem Abstand zwischen den zwei Halswänden (12) ist.

13. Zum Einbau in ein Profil bestimmte Mutter nach einem der Ansprüche 6 bis 12, dadurch gekennzeichnet, daß der senkrecht zur Ebene des Körpers gemessene Abstand (F) zwischen der Zone, wo wenigstens einer der Vorsprünge (47, 48) in Berührung mit der entsprechenden Schulterwand (9) ist, und dem Ende dieser Lasche etwa gleich dem freien Abstand (G) zwischen den Schulterwänden (9) und der Bodenwand (2) des Profils (1), jedoch etwas kleiner als dieser Abstand (G) ist.

14. Zum Einbau in ein Profil bestimmte Mutter nach einem der Ansprüche 6 bis 13, dadurch gekennzeichnet, daß sie aus gestanztem und gebogenem Stahlblech gebildet ist.

FIG_1

FIG_2

FIG_3

FIG.4

FIG.5

FIG.6

FIG.7

FIG.8

FIG.9